# EUROPEAN PATENT APPLICATION

(11) **EP 4 442 756 A1**
(43) Date of publication of application: **09.10.2024**
(21) Application number: 23166647.0
(22) Date of filing: 04.04.2023
(51) Int. Cl.: C08L 23/22

(54) **COMPOSITION FOR THE PROTECTION OF A SHAPED ARTICLE AGAINST CORROSION**

(71) Applicant: Seal for Life Global Dutch Holding B.V., 9503 JB Stadskanaal (NL)
(72) Inventor: SCHUTTE, Jan Otto, 9503 JB Stadskanaal (NL); BROESDER, Hindrik Harm, 9503 JB Stadskanaal (NL); CUDIC, Dinko, 9503 JB Stadskanaal (NL); SALEHPOUR, Somaieh, 9503 JB Stadskanaal (NL)
(74) Representative: Jones Day

(57) **Abstract**

The present invention is directed to a composition for the protection against corrosion of an article, wherein the corrosion protecting composition comprises: (i) an amorphous polymer composition comprising one or more polyisobutenes each having a glass transition temperature of -40 °C or less as determined by differential scanning calorimetry (DSC); (ii) one or more butyl rubbers; (iii) one or more antioxidants; and (iv) one or more filler materials, wherein the one or more polyisobutenes are independently selected from the group consisting of low-molecular weight polyisobutenes (LMW PIB) having an average molecular weight Mᵥ in the range of about 500 to about 20,000, and mid-molecular weight polyisobutenes (MMW PIB) having an average molecular weight Mᵥ in the range of about 20,000 to about 120,000.

## Description

### Field of the invention

The present invention relates to a composition for the protection of an article, such as a shaped article. In particular, the present invention is directed to a composition for corrosion protection of an article. The article may be made from or consisting essentially of one or more metals, metal compositions or alloys. The present invention relates in particular to a composition for insulating and sealing an article that is in contact with salts, moisture, water and other substances that are corrosive to the article with the effect that said article is protected against corrosion. The present invention also relates to a composition that can be used to protect subterranean and submerged articles against corrosion. In the present invention, an article is envisaged to encompass oil lines, oil pipes, gas lines, gas pipes, man hole covers, underground tanks, man hole covers, welding joints, flanges, crane hooks, thermit weldings in divisible shafts below the ground level and in T-joints. The present invention also relates to a composition that can be used to protect materials used in wind power plants (wind turbines), on- and off-shore.

### Background of the invention

For protecting (shaped) articles against corrosion a plurality of materials is employed. Shaped articles such as man hole covers, underground tanks, pipes, or lines are often made of metal, metal compositions or alloys and such shaped articles are subject to corrosion since they are in contact with salts, moisture, water and other corrosive components. Corrosion is obviously not preferred since it is detrimental to the strength of the respective material and must therefore be prevented or inhibited to extend the life cycle of the shaped article as much as possible.

Materials for preventing corrosion, in particular long-term corrosion, must have a long-term chemical, physical, mechanical and thermal stability. Moreover, as is well known in the art, the application of such materials is often a laborious, time-consuming and expensive process. The materials must further have a good adhesion on materials used, such as metals, metal compositions, alloys and other materials such as other coatings already present at the metallic structures like epoxy coatings, plastic materials or polymers, for example polyethylene and polypropylene. Another requirement is that they have a very low permeability for water, salts and moisture.

Several materials for inhibiting or preventing corrosion are known in the art. Examples of such materials are bitumen and synthetic, thermosetting resins, e.g. epoxy coatings and polyurethane coatings. These materials have the disadvantage that a hard coating or seal is produced which can easily split or tear under the influence of for example mechanical stress or the like. Another disadvantage of these materials is that, for example, volatile solvents or other components harmful for the environment and humans are required for applying such materials. After application of these materials, for example the solvents may evaporate thereby leading to the formation of a micro-porous seal or coating which is at least permeably for corrosive substances such as salts, water and moisture.

Bitumen are also permeable for water and do generally not meet the requirements laid down by the KIWA ("Keuringsinstituut voor Waterleidingartikelen"; Dutch Inspection Institute for Water Supply Articles). Moreover, bitumen have in general a glass transition temperature of more than about 10 °C. As a consequence, formation of cracks can easily occur during low temperature conditions, e.g., the winter.

Synthetic, thermosetting resins are also easily split or torn as a result of mechanical stress. Moreover, they are not easily removed from the shaped article and easy removal is important when repairs have to be carried out to the shaped article or when the level of deteriorated protection provided by the thermosetting resin needs to be repaired. In addition, cleaning of the shaped article is also difficult which is required when a new seal or coating is applied so that complex and laborious cleaning techniques such as sand blasting have to be employed for cleaning the shaped article to a sufficient extent. It is obvious to the skilled person that if the shaped article is a gas or oil line or pipe line of several hundreds of miles long, replacing or repairing a seal or coating made of synthetic, thermosetting resins is a time-consuming and expensive operation. Finally, applying a seal or coating based on synthetic, thermosetting resins in itself is difficult and laborious.

US 5,898,044 discloses a composition having improved properties when compared with the materials discussed above. This composition comprises an non-polar, non-thermosetting fluid polymer, e.g. polyisobutene, having a glass transition temperature lower than -20 °C and a surface tension of less than 40 mN/m at temperature above its glass transition temperature, and a filler material. The composition may contain an antioxidant such as 2,6-dit-butyl-4-methylphenol (BHT). The composition can be used in combination with a shrink sleeve, a tape, a belt, a mat or a tape having an open cell structure. However, the composition according to US 5,898,044 has certain disadvantages. For example, if the composition contains 2,6-di-t-butyl-4-methylphenol as the antioxidant, the present inventors have found that the antioxidant leaches out of the composition thereby deteriorating the protecting properties of the composition due to oxidative degradation of the non-thermosetting fluid polymer. This has the disadvantageous effect that, for example, the adhesive strength and/or the impermeability of the composition deteriorates over time when applied to a shaped article. Consequently, this sealing system has a reduced life cycle and requires earlier repair or replacement than desired. Since the sealing system is required to have a long life cycle, i.e. in general 50 years or more, and the application thereof is expensive and laborious, it is obvious to the skilled person that such a sealing system needs improvement. Therefore, the inventors have investigated this technical problem and discovered that the decrease of adhesive strength is caused by leaching out of 2,6-di-t-butyl-4-methylphenol.

WO 99/56055 discloses a method for protecting a metal pipe against corrosion by applying a film to the metal pipe. The film comprises an outer layer, an intermediate layer and an inner layer. The outer layer is preferably made from a polymer, in particular high density polyethylene. The intermediate layer is preferably made of a metal, in particular aluminum. The inner layer comprises preferably an adhesive or mastic. The film must be applied by employing heat. As is obvious to the skilled person, this method is laborious and time-consuming and even inferior to the methods disclosed in US 5,898,044.

WO 99/48997 discloses a composition comprising an organic material that is subjective to oxidative, thermal or light-induced degradation and two or more antioxidants, wherein the organic material may be selected from a wide range of materials including polyisobutene. According to WO 99/48997, the compositions may be used in an extreme wide variety of applications, e.g. in lubricating oils, hydraulic fluids and in metal-working fluids. However, WO 99/48997 does not disclose that the composition can be used for protecting a shaped article against corrosion.

EP A 1086963 discloses an ethylene copolymer composition that can be used as a gasket, e.g. a corrosion-resistant pipe joint. It discloses a stretch packaging film having a multilayer structure, for example a multilayer film having a non-tacky surface and a tacky surface. Such a multilayer film has as intermediate layer a film layer comprising an ethylene/α-olefin copolymer, a non-tacky layer of LLDPE having a higher density than the ethylene/α-olefin copolymer, and a tacky layer comprising a composition comprising the ethylene/α-olefin copolymer and 2 to 10% of liquid polyisobutene, liquid polybutadiene or the like. The stretch packaging film has a thickness of 10 to 50 µm.

### Summary of the invention

The present invention relates to a corrosion protection composition comprising:
(i) an amorphous polymer composition comprising one or more polyisobutenes each having a glass transition temperature of -40 °C or less as determined by differential scanning calorimetry (DSC);
(ii) one or more butyl rubbers;
(iii) one or more antioxidants; and
(iv) one or more filler materials,
wherein the one or more polyisobutenes are independently selected from the group consisting of low-molecular weight polyisobutenes (LMW PIB) having an average molecular weight Mᵥ in the range of about 500 to about 20,000, and a mid-molecular weight polyisobutenes (MMW PIB) having an average molecular weight Mᵥ in the range of about 20,000 to about 120,000.

### Detailed description of the invention

The term "to comprise" and its conjugations as used in this description and/or in the claims are used in their non-limiting sense to mean that items following the term are included, but items not specifically mentioned are not excluded.

The term "consisting of" and its conjugations as used in this description and/or in the claims are used in their limiting sense to mean that items following the term are included, but further items not specifically mentioned are not included.

The term "consisting essentially of" and its conjugations as used in this description and/or in the claims are used in their limiting sense to mean that specific further components can be present, namely those not materially affecting the essential characteristics of the composition.

Reference to an element by the indefinite article "a" or "an" does not exclude the possibility that more than one of the element is present, unless the context clearly requires that there is one and only one of the elements. The article "a" or "an" usually means "at least one".

Encompassed in this description are also all possible combinations of embodiments, even if disclosed as separate embodiments. In other words, the skilled person will understand that embodiments can be combined unless specifically stated otherwise. This may lead to combination of components in the corrosion protection composition not specifically disclosed in that combination by that are within the scope of the invention.

The term "average molecular weight" used herein may refer to the "number average molecular weight (Mₙ)", "viscosity average molecular weight (Mᵥ)", or "weight average molecular weight (M_{w})" in case the kind of average molecular weight is not defined specifically.

The term "polymer" includes homopolymers and copolymers.

The term "copolymer" includes polymers comprising two or more different monomers.

Commonly, a skilled person uses the term "polyisobutene" (PIB) in a general manner when referring to an amorphous polymer comprising isobutene monomers as a major component, and optionally further monomers, such as 1-butene, 2-butene and/or butadiene. These amorphous polymers have similar properties, in particular in terms of glass transition temperatures and surface tension. Depending on the desired purity of the polyisobutenes, they may be prepared by various methods (*cf.* Ullmanns "Encyklopädie der technischen Chemie", 4th Ed., Vol. 19, pages 216-223, 1980, and Vol. 13, pages 621-623, 1977). The term "polyisobutene" comprises polymers that comprise isobutene monomers in amounts such as at least about 50 wt.%, at least about 75 wt.%, at least about 90 wt.% or at least about 95 wt.%, and optionally a monomer selected from the group consisting of C₂-C₁₂ alkenes, C₄-C₁₂ alkadienes, and mixtures thereof in amounts such as about 50 wt.% or less, about 25 wt.% or less, about 10 wt.% or less or about 5 wt.% or less, calculated on the total weight of the polyisobutene.

The term "polyisobutene homopolymer" is used herein in order to distinguish polyisobutenes having a very high isobutene monomer content from, for example, polyisobutenes having a lower isobutene monomer content as described above, and from polybutenes and butyl rubbers as described below. Thus, the term "polyisobutene homopolymer" as used herein refers to a polymer consisting essentially of isobutene monomers, *i.e.,* a polymer comprising more than about 98 % to about 100 % isobutene, preferably about 99 % to about 100 %, more preferably about 99.5 % to about 100 %, even more preferably about 99.7 % to about 100 %, and in particular about 99.9 % to about 100 %, all by weight of isobutene, based on the total weight of the polymer. In a preferred embodiment of the present invention, the polyisobutene is a polyisobutene homopolymer.

The term "polybutene" used herein refers to a polymer prepared from a C₄-fraction obtained from the oil refining process (such as a C₄-fraction comprising 1-butene, 2-butene, isobutene and optionally butadiene).

The term "butyl rubber" refers to a polymer of about 95 wt.% to about 98 wt.% isobutene and about 2 wt.% to about 5 wt.% isoprene, based on the total weight of the polymer. This includes both vulcanized and non-vulcanized butyl rubbers. Furthermore, this also includes halogenated butyl rubbers.

The terms "mechanical protective layer" and "outer wrap layer" are used interchangeably herein and both refer to a layer that protects the underlying layer or layers mechanically from external effects.

Throughout the application the terms "article" and "shaped article" are used interchangeably.

The inventive corrosion protection composition provides improved adhesion to surfaces of any kind, has improved mechanical strength and improved mechanical load-bearing capacity. Thus, advantages of the present invention are that the inventive compositions have an improved setting on the shaped article to be sealed or coated including an improved deformability and a very good adhesion, i.e. a very good adhesive power to the surface of the shaped article. The composition according to the invention does not set and therefore remains soft and is impermeable for water, moisture, salts and is pore-tight. Permeability can be adjusted, for example, by the use and addition of filler materials. The amount of filler materials should not exceed certain thresholds but undermine critical values known to the skilled person in this technical field. An additional and very important feature of the composition of the present invention is that if a coating or seal made of the inventive composition is mechanically deformed to a relatively small extent, the damage is repaired automatically within a relatively short period of time due to the fluid-like and/or visco-elastic nature of the composition of the invention. That is, the composition has self-recovering properties and any deformation or damage is repaired as a result of flow of the composition into holes or cavities caused by mechanical deformations or soil stresses. The self-repairing effect will particularly be obtained when the composition is wrapped over, for example, tubular objects and fully covered by a flexible outer wrap layer that is applied with tension. The tension remaining in the outer layer will press the composition towards the damaged section. Consequently, the seal or coating comprising the composition according to the invention is not only smooth when applied, but even if indentations, imprints, dents, cavities and the like are caused by mechanical forces, they will disappear in due course and the smooth surface of the seal or coating reappears. Obviously, because of this fluid-like nature any seal or coating comprising the composition according to the present invention does not tear or break and does not build up internal stresses. Likewise, irregularities on the surface of the shaped article are perfectly filled or enveloped by the composition according to the invention where materials according to the state of the art often give rise to problems in such circumstances.

According to the present invention, the inventive composition may be used in combination with a backing layer resulting in a wrapping tape for the protection of an article against corrosion (defined in more detail below). Such wrapping tape may be applied with the above-defined (outer) mechanical protection layer providing the complete coating of the invention. In addition to the above properties the inventive compositions have improved drip resistance, i.e. no dripping of the composition can be observed after 48 hours at Tₘₐₓ + 20 °C (minimum 80 °C). Such drip resistance is tested on the wrapping tape, meaning that the compound is extruded, calendered or rolled to a thickness of, for example, 2 mm thickness, and the product further comprises a mesh or netting incorporated in the compound and optionally a polymeric backing (e.g. PE) on one side of the product. The compositions also show good adhesion measured by peel test at 10 mm/min peel rate to steel and plant coatings (like PE, PP, etc.), wherein the peel strength at 23 °C ≥ 0,2 N/mm and at Tₘₐₓ (85 °C) ≥ 0,02 N/mm (test according to ISO 21809-3). For example, the inventive compositions have a peel strength at 23 °C of ≥ about 0,3 N/mm, ≥ about 0,4 N/mm or ≥ about 0,5 N/mm. Also and in addition to the afore-mentioned the inventive compositions have a peel strength at 85 °C of ≥ about 0,03 N/mm, ≥ about 0,04 N/mm, ≥ about 0,05 N/mm, or ≥ about 0,06 N/mm. The cohesive separation mode and coverage of substrate with remaining compound ≥ 95%. The lap shear test at 10 mm/min shear rate shows a lap shear strength at 23 °C ≥ 0,004 N/mm² and at Tmax ≥ 0,002 N/mm² as well as a cohesive separation mode and coverage of substrate with remaining compound ≥ 95%. The specific electrical insulation resistance of the inventive composition is ≥ 10E+08 Ω.m². It is also observed that impact resistance of complete coating comprising one layer of the wrapping tape and two layers of an appropriate outer wrap layer at 23 °C is ≥ 15 Joules when tested in accordance with ISO 21809-3. Further, the cathodic disbondment resistance of complete coating at 23 °C and at Tₘₐₓ is 0 mm disbondment, no holidays are observed and self-healing is completed.

Besides this, the inventive compositions also show tack (i.e. instant adhesion) and ease of application at various ambient temperatures. Ambient temperatures dependent on the location and may be different on the northern hemisphere and southern hemisphere. The tack of the inventive composition is present at any ambient temperature.

Other advantages of the composition according to the invention are a high chemical stability and resistance over a wide pH-range, very good electrochemical impedance, a high cathodic protection performance, and essentially no cathodic disbondment. Additionally, the composition can be used within an operating temperature range of -50 to 120 °C, such as -50 °C to 100 °C, -50 °C to 85 °C or -45 °C to 85 °C. Any temperature, such as -40 °C, - 35 °C, -30 °C, -25 °C, -20 °C, -15 °C, -10 °C, -5 °C, -0 °C, 10 °C, 20 °C, 30 °C, 40 °C, 50 °C, 60 °C, 70 °C, 80 °C, 90 °C, 100 °C, or 110 °C can be combined with any of the aforementioned ranges.

There are further advantages of the composition according to the present invention. Most protecting systems require the use of a primer before these systems are applied to the shaped article to provide sufficient adhesion. The use of a primer is unnecessary with the composition according to the present invention which implies that the composition can be applied within a shorter period of time thereby making the operation less expensive. Thus, in one preferred embodiment provided herein the inventive composition is without the use of a primer.

In a desert-like environment sand storms regularly occur. Any protective systems that must be applied by spray techniques cannot be used under such circumstances. However, the present inventors have found that the composition according the present invention can be applied without leading to an inferior protective layer.

Shaped articles can also directly be coated with the composition according to the invention under humid conditions, whereas most systems according to the prior art can generally not be used under such conditions. Thus, in one embodiment, the inventive corrosion protection composition can be applied to a wet or moist surface. In one embodiment condensation should not occur when applying the inventive composition.

Shaped articles protected by the composition according to the invention can be easily inspected since a protective layer of the composition according to the invention can easily be removed and, after inspection, be reapplied. Most materials according to the state of the art are far more difficult to remove. Moreover, when such prior art materials are removed, the surface of the shaped article needs to be thoroughly cleaned before such materials are reapplied. This is not necessary with the present invention. Obviously, a protective layer of the composition according to the invention is also more easily tested.

### Amorphous polymer composition

The amorphous polymer composition of the invention comprises one or more amorphous polymers. An amorphous polymer according to the present invention is a polymer that does not have an organized pattern in its molecular structure which causes absence of crystallinity. According to the present invention the amorphous polymer composition comprises one or more polyisobutenes (PIB) each having a glass transition temperature of -40 °C or less as determined by differential scanning calorimetry (DSC). The amorphous polymer composition may comprise one or more further amorphous polymers, preferably hydrocarbonaceous polymers. It is preferred that such hydrocarbonaceous polymers are essentially non-vulcanized (non-cross-linked) so that its cold flow properties are optimized. In a preferred embodiment the amorphous polymer composition only comprises one or more polyisobutenes. The amorphous polymer composition according to the present invention does not comprise any butyl rubber.

The amorphous polymer may comprise at least one polymer that is of low-molecular weight. The amorphous polymer may comprise at least one polymer that is of mid-molecular weight. The number average molecular weights and molecular weight distributions can be determined by gel permeation chromatography (GPC) as is well known in the art.

The average molecular weight may be indicated as a number average molecular weight (Mₙ), a viscosity average molecular weight (Mᵥ), or a weight average molecular weight (M_{w}). In one embodiment, the average molecular weight is a viscosity average molecular weight (Mᵥ).

The amorphous polymer has a glass transition temperature T_{g} of less than about - 40 °C, preferably less than about -50 °C, more preferably less than about -60 °C. According to general requirements, the amorphous polymer does not have a melting point or crystallization point when measured with differential scanning calorimetry (DSC) in the temperature range of -120 to +190 °C. The amorphous polymer may have a surface tension of less than about 50 mN/m at 20 °C, preferably less than about 40 mN/m at 20 °C. The glass transition temperature(s) can be determined by DSC known in the art, such as ISO 11357-2. The surface tension can be determined by methods known in the art (*cf.* S. Wu, J. Colloid. Interface. Sci. *31*, 153, 1969; D.G. LeGrand, G.L. Gaines, Jr., J. Colloid. Interface Sci. *31*, 162, 1969).

According to the invention, the polyisobutenes employed in the composition according to the present invention have a glass transition temperature of less than -40 °C, preferably less than -50 °C and more preferably less than -60 °C. The surface tension of the polyisobutenes may be less than 40 mN/m at a temperature above the glass transition temperature of said polyisobutene.

The surface tension parameter is also used to define a certain class of polyisobutenes. In general, polymers having a relatively low surface tension have better flow, wetting and adhesion properties than polymers having a relatively high surface tension. Furthermore, it is also well known in the art that the surface tension increases with increasing molecular weight (and also with increasing viscosity), although the increase above a molecular weight of 2000-3000 is in general negligible and reaches about 1 mN/m of the value at infinite molecular weight. Reference is for example made to J. Bandrup, E.H. Immergut, Polymer Handbook, third edition (1989), page VI/412. Hence, in the present invention the surface tension is used to distinguish between very low molecular weight polyisobutenes from polyisobutenes according to the present invention and therefore defines a minimum of the molecular weight. Hence, the polyisobutenes according to the invention have a surface tension less than 40 mN/m at a temperature that is higher than the glass transition temperature.

The one or more polyisobutenes may comprise at least one polyisobutene that is of low-molecular weight (LMW PIB). A low-molecular weight polyisobutene has an average molecular weight in the range of about 500 to about 20,000. The polyisobutene may also comprise at least one polyisobutene that is of mid-molecular weight (MMW PIB). A mid-molecular weight polyisobutene has an average molecular weight of about 20,000 to about 100,000. In one embodiment, a mid-molecular weight polyisobutene has an average molecular weight of about 20,000 to about 120,000.

The polyisobutene according to the invention does not comprise any high-molecular weight polyisobutene (HMW PIB), i.e. a polyisobutene having an average molecular weight higher than 120,000.

The amorphous polymer composition comprises one or more polyisobutenes independently selected from the group consisting of (a) polyisobutenes having a number average molecular weight Mₙ of 500 - 5.000; (b) polyisobutenes having a viscosity average molecular weight Mᵥ of 5.000 - 20.000; (c) polyisobutenes having a viscosity average molecular weight Mᵥ of 20.000 - 35.000; (d) polyisobutenes having a viscosity average molecular weight Mᵥ of 35.000 - 45.000; (e) polyisobutenes having a viscosity average molecular weight Mᵥ of 45.000 - 55.000; (f) polyisobutenes having a viscosity average molecular weight Mᵥ of 55.000 - 65.000; (g) polyisobutenes having a viscosity average molecular weight Mᵥ of 65.000 - 75.000; (h) polyisobutenes having a viscosity average molecular weight Mᵥ of 75.000 - 85.000; and (i) polyisobutenes having a viscosity average molecular weight Mᵥ of 85.000 - 120.000.

In one embodiment, polyisobutenes (a) may have a viscosity average molecular weight Mᵥ of 500 - 5.000. In any of the disclosure above, the average molecular weight may be a number average molecular weight (Mₙ), a viscosity average molecular weight (Mᵥ), or a weight average molecular weight (M_{w}). In one embodiment, the average molecular weight is a viscosity average molecular weight (Mᵥ) or may be as defined below. In one embodiment, all the above-mentioned molecular weight ranges are number average molecular ranges (Mₙ). In one embodiment, all the above-mentioned molecular weight ranges are weight average molecular ranges (M_{w}). In one embodiment, all the above-mentioned molecular weight ranges are viscosity average molecular ranges (Mᵥ). Polyisobutenes having either a viscosity average molecular weight, or a number average molecular weight, or a weight average polymer weight in any of the above-mentioned ranges (a) to (i) can be combined.

In one embodiment, the amorphous polymer composition may comprise only one of the above-mentioned polyisobutenes. In another embodiment, the amorphous polymer composition may comprise two of the above-mentioned polyisobutenes. In another embodiment, the amorphous polymer composition may comprise three of the above-mentioned polyisobutenes. In another embodiment, the amorphous polymer composition may comprise four of the above-mentioned polyisobutenes. In another embodiment, the amorphous polymer composition may comprise five of the above-mentioned polyisobutenes. In another embodiment, the amorphous polymer composition may comprise six or more of the above-mentioned polyisobutenes.

In one embodiment, the amorphous polymer composition comprises at least one LMW PIB, for example at least one polyisobutene from the groups (a) and (b) above. In another embodiment the amorphous polymer composition comprises at least one LMW PIB, for example at least one polyisobutene from the groups (a) and (b) above and at least one MMW PIB, for example at least one polyisobutene from the groups (c) and (i) above. In another preferred embodiment the amorphous polymer composition comprises only one LMW PIB from the groups (a) and (b) above and only one MMW PIB from the groups (c) and (i) above. In a further embodiment the amorphous polymer composition comprises at least one MMW PIB, for example at least one polyisobutene from the groups (c) to (i) above.

Without wishing to be bound to a specific theory, the lower molecular weight polyisobutene will provide tack, flow and faster wetting of substrates, whereas the medium molecular weight polyisobutene will provide stronger adhesion and resistance to shear. By using mixtures of polyisobutenes having different molecular weights the resulting inventive composition has improved properties in terms of tackiness by also having an improved durability. Medium molecular weight grades serve as a valuable elastomeric basis; they exhibit a high cohesive strength. Low-molecular weight grades are liquid-like, suitable tackifiers and promote wetting and adhesion.

Mixtures of at least two polyisobutenes with different molecular weights may harmonize competing factors such as the ability of the adhesive to spread and wet the probe, and the resistance of the composition to withdrawal.

In one embodiment, the one or more polyisobutenes are used in an amount of about 10-70 wt.%. For example, the one or more polyisobutenes may be used in an amount of about 15-65 wt.%, about 20 to 60 wt.%, about 25 to 55 wt.%, or about 30 to 50 wt.%. In a preferred embodiment, the one or more polyisobutenes are used in an amount of about 30 to 50 wt.%. All based on the total weight of the corrosion protection composition.

In another embodiment, in case two polyisobutenes are used, the weight ratio is about 1: 1, about 2: 1, about 3: 1, about 4:1 or about 5:1.

According to the invention, the amorphous polymer composition comprises about 50 to about 100 wt.% of one or more polyisobutenes, and about 0 to about 50 wt.% of one or more other amorphous polymer(s), based on the total weight of the amorphous polymer composition. In a preferred embodiment, the amorphous polymer composition comprises about 80 to about 100 wt.% of one or more polyisobutenes, and about 0 to about 20 wt.% of one or more other amorphous polymer(s), based on the total weight of the amorphous polymer composition. In an even more preferred embodiment, the amorphous polymer composition comprises about 90 to about 100 wt.% of one or more polyisobutenes, and about 0 to about 10 wt.% of one or more other amorphous polymer(s), based on the total weight of the amorphous polymer composition. In one embodiment, the amorphous polymer composition comprises more than 95 wt.% of one or more polyisobutenes, such as more than 98 wt.% of one or more polyisobutenes, more than 99 wt.% of one or more polyisobutenes or more than 99.5 wt.% of one or more polyisobutenes, based on the total weight of the amorphous polymer composition. Most preferably, the amorphous polymer composition comprises about 100 wt.% of one or more polyisobutenes. In a still further embodiment, the amorphous polymer composition comprises 100 wt.% of one or more polyisobutenes. All the above is based on the total weight of the amorphous polymer composition.

The one or more other amorphous polymer(s) are selected from the group consisting of suitable polymers, such as, but not limited to, ethene-propene copolymers, ethene-butene copolymers, ethane-propene-butene terpolymers, amorphous propene copolymers, atactic polypropenes, poly(2-methyl-1-pentene) and mixtures thereof. According to a more preferred embodiment of the present invention, the one or more other amorphous polymer(s) are selected from the group consisting of polybutenes, atactic polypropene, copolymers of propene and a C₂-C₁₂ alkene other than propene (and optionally a diene), copolymers of ethene and a C₂-C₁₂ alkene other than ethene (and optionally a diene), and mixtures thereof. According to an even more preferred embodiment of the present invention, the one or more other amorphous polymer(s) are selected from the group consisting of ethene-propene copolymers, ethene-butene copolymers, ethene-propene-butene terpolymers, ethene-propene-diene copolymers, polybutenes, atactic polypropenes and mixtures thereof. In one embodiment, the amorphous polymer is only selected from the above defined polyisobutenes.

The one or more other amorphous polymer(s) may have a glass transition temperature of less than about -20 °C, more preferably less than -40 °C and most preferably less than -60 °C. Additionally, it is preferred that the olefin polymer has a surface tension of less than 40 mN/m at 20 °C.

### Butyl rubber

The corrosion protection composition of the invention comprises one or more butyl rubbers. As mentioned above, the term "butyl rubber" refers to a polymer of about 95 wt.% to about 98 wt.% isobutene and about 2 wt.% to about 5 wt.% isoprene, based on the total weight of the polymer. Encompassed are both vulcanized and non-vulcanized butyl rubbers. In a preferred embodiment the butyl rubber is a non-vulcanized butyl rubber. The definition of the butyl rubbers according to the present invention also includes halogenated butyl rubbers. In one embodiment halogenated butyl rubbers are not used.

In one embodiment of the invention the corrosion protection composition comprises one butyl rubber. In another embodiment the corrosion protection composition comprises a mixture of two butyl rubbers. In a still other embodiment, the corrosion protection composition comprises a mixture of three or more butyl rubbers. In a preferred embodiment the corrosion protection composition comprises one butyl rubber.

The corrosion protection composition comprises about 5-25 wt.% of one or more butyl rubbers. For example, the corrosion protection composition may comprise about 6-24 wt.%, about 7-23 or about 8-20 wt.% of one or more butyl rubbers, all based on the overall weight of the corrosion protection composition. In one embodiment, the amount of the butyl rubber should not exceed 10 wt.%. All amounts based on the total amount of the corrosion protection composition.

The one or more butyl rubber may have a Mooney viscosity (ML 1+8 at 125 °C) in a range from about 25 MU to about 100 MU, such as in a range from about 30 MU to about 75 MU, from about 30 MU to about 50 MU, or from about 30 MU to about 45 MU, measured according to ISO 289-1 or according to ASTM D1646. In one embodiment, the one or more butyl rubbers have a Mooney viscosity (ML 1+8 at 125 °C) < 55 MU according to ISO 289-1or according to ASTM D1646.

### Filler material

The composition of the invention comprises one or more (inert) filler(s) (i.e. filler material(s)).

In one embodiment, the filler comprises one or more inert inorganic and/or one or more organic filler(s). Examples of (inert) inorganic fillers are inorganic minerals, salts and/or oxides, such as, for example, chalk, barium sulphate, calcium carbonate, calcium sulphate, calcium oxide, aluminum hydroxide, aluminum oxide, magnesium oxide, silicon dioxide, fumed silica, titanium dioxide, ground quartz, glass, talc, slate and kaolin. In one preferred embodiment, the filler comprises calcium carbonate. In one embodiment, the filler comprises fumed silica. In one embodiment, the filler comprises kaolin. In one embodiment, the filler comprises calcium carbonate and kaolin. In one embodiment, the filler comprises calcium carbonate and fumed silica. In one embodiment, the filler comprises calcium carbonate, kaolin and fumed silica. In a preferred embodiment the filler is calcium carbonate.

In one embodiment, the corrosion protecting composition of the invention additionally comprises one or more fillers in the form of a pigment. The pigment may be selected from any pigment generally used in this technical field. The corrosion protecting composition may comprise a pigment in the amount of 0.1 wt.%, 0.2 wt.%, 0.3 wt.%, 0.4 wt.%, or 0.5 wt.% or more, all based on the total weight of the composition. In one embodiment the corrosion protecting composition comprises one pigment. In another embodiment the corrosion protecting composition comprises a mixture of two or more pigments.

In one embodiment, the filler comprises one or more organic filler(s). Fillers of an organic nature can be but are not limited to cellulose, polystyrene, polyvinyl chloride, polyethene, polypropene, polyisoprene, polyamide and polyester or mixtures thereof. Polyethene and polypropene may be present in the amorphous polymer composition that is part of the corrosion protecting composition. In one embodiment, the organic filler is a polymeric filler. When said polymers are applied as a filler material, the requirements of, *e.g*., glass transition temperature or molecular weight as specified for the amorphous polymer composition do not have to be met. Syndiotactic polypropene with a glass transition temperature higher than -20 °C may be used as a filler. In one embodiment, the corrosion protection composition does not comprise an organic filler.

The total amount of the one or more filler(s) present in the corrosion protecting composition is in the range of 25 to 80 wt.%, preferably 30 to 75 wt.%, more preferably 35 to 70 wt.% and most preferably 40 to 70 wt.%, all based on the total weight of the corrosion protecting composition. In an even more preferred embodiment, the one or more filler(s) are present in an amount of about 30 to 60 wt.%. In one embodiment, the total amount of filler present in the corrosion protecting composition is at least 30 wt.%, at least 40 wt.%, at least 50 wt.%, or at least 60 wt.%, all based on the total weight of the corrosion protecting composition.

According to the present invention all combinations of the above-mentioned fillers are encompassed. In one embodiment mixtures of two or more of any of the above-mentioned fillers in any of the above-mentioned amounts are encompassed by the present invention, such as three or more of any of the above-mentioned fillers, four or more of any of the above-mentioned fillers, five or more of any of the above-mentioned fillers, six or more of any of the above-mentioned fillers, or even more different fillers. In one embodiment, only one filler is used.

### Antioxidants

Properties of polymers, e.g. polyisobutenes, are strongly influenced by degradation reactions that may occur during production and uses. In many cases these degradation reactions are initiated by the presence of oxygen which may be catalyzed by light, heat, water and metal ions. In initiation reactions free radicals are formed that in propagation reactions lead to the formation of unstable hydroperoxides. The hydroperoxides are the main initiators of thermal degradation and photodegradation processes. Antioxidants are commonly used to prevent such degradation reactions.

The antioxidant(s) used in the present invention may be one or more primary and/or a secondary antioxidants, one or more multifunctional antioxidants (i.e., an antioxidant combining primary and secondary antioxidant functions) or a lactone. According to the invention primary antioxidants interfere directly with propagation reactions leading to degradation, i.e. that they terminate such propagation reactions, whereas secondary antioxidants induce decomposition of the hydroperoxides The antioxidant may comprise a combination of two or more antioxidants. In one embodiment, the corrosion protecting composition comprises two antioxidants. In one embodiment, the corrosion protecting composition comprises three antioxidants. More preferably, the antioxidant is an anti-oxidant composition comprising at least two antioxidants, wherein it is preferred that the antioxidant composition comprises a primary antioxidant and a secondary antioxidant. According to a preferred embodiment, the primary antioxidant is selected from the group consisting of sterically hindered phenol compounds.

The one or more antioxidants may be present in an amount of up to 5 wt.%. For example, the one or more antioxidants may be present in an amount of about 0.01 wt.% to about 5 wt.%, such as about 0.05 to about 5 wt.%, preferably about 0.1 to about 4 wt.%, more preferably of about 0.2 to about 3 wt.% and most preferably about 0.3 to about 2 wt.%, all based on the total weight of the corrosion protection composition of the invention. In one embodiment, the one or more antioxidants are present in an amount of about 0.1 wt.%, 0.2 wt.%, 0.3 wt.%, 0.4 wt.%, 0.5 wt.%, 0.6 wt.%, 0.7 wt.%, 0.8 wt.%, 0.9 wt.% or 1 wt.%, based on the total weight of the composition of the invention. In one embodiment, the one or more antioxidants are present in an amount of about 0.3 wt.%. In another embodiment, the one or more antioxidants are present in an amount of about 0.4 wt.%. In another embodiment, the one or more antioxidants are present in an amount of about 0.5 wt.%.

According to the invention, the primary antioxidants may be selected from the group consisting of sterically hindered phenol compounds, sterically hindered alkylthiomethylphenol or arylthiomethylphenol compounds, and secondary aromatic amines, but are not limited thereto.

In one embodiment, the sterically hindered phenol compounds are selected from the compounds according to formula (I): 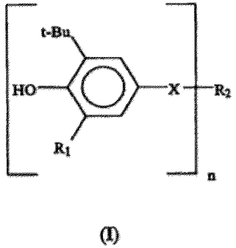 wherein R₁ is a C₁-C₄-alkyl group; n is 1, 2, 3 or 4; X is -CH₂-, -CH₂-CH₂-C(O)-Y- or -CH₂-C(O)-CH₂-CH₂-; Y is -O- or -NH- is; and if n=2, then X is -CH₂-CH₂-C(O)-Y- wherein Y is bonded to R₂, and R₂ is a C₂-C₁₂-alkylene group, a C₄-C₁₂-alkylene group that is interrupted by one or more oxygen atoms or sulphur atoms, or is a direct bond; and if n = 4, then X is -CH₂-CH₂-C(O)-Y- wherein Y is bonded to 2 and R₂ is C₄-C₁₀-alkanetetrayl.

The C₁-C₄ group encompasses methyl, ethyl, n-propyl, i-propyl, n-butyl, i-butyl and t-butyl. According to the invention, the preferred meaning for R₁ is t-butyl.

The C₂-C₁₂-alkylene group is preferably branched or linear. Examples of such groups are ethylene, propylene, tetramethylene, pentamethylene, hexamethylene, heptamethylene, octamethylene, decamethylene and dodecamethylene. R₂ is preferably a C₂-C₁₀-alkylene group, more preferably a C₂-C₈-alkylene group and in particular a C₄-C₈-alkylene group, typically hexamethylene.

The C₄-C₁₂-alkylene group that is interrupted by one or more oxygen atoms or sulphur atoms is preferably a C₄-C₁₀-alkylene group, more preferably a C₄-C₈-alkylene group and in particular a C₄-C₆-alkylene group. Examples of suitable groups are -CH₂-O-CH₂-CH₂-O-CH₂-, -CH₂-(O-CH₂-CH₂)₂-O-CH₂-, -CH₂-(O-CH₂-CH₂)₃-O-CH₂-, -CH₂-(O-CH₂-CH₂-)₄-O-CHz-, -CHz-CHz-O-CHz-CHz-O-CHz-CHz- and -CH₂CH₂-S-CH₂-CH₂-.

Particularly preferred C₄-C₁₂-alkylene groups that are interrupted by one or more oxygen atoms or sulphur atoms are -CHz-CHz-O-CHz-CHz-O-CHz-CHz- and -CH₂-CH₂-S-CH₂-CH₂-.

According to the invention, C₄-C₁₀-alkanetetrayl is preferably (-CH₂)₄C.

Preferred sterically hindered phenol compounds according to the invention are those wherein in formula (I) n = 1 and R₂ is C₂-C₂₀-alkyl. However, compounds that are more preferred are those wherein in formula (I) n = 2, R₂ is C₂-C₈-alkylene, C₄-C₈-alkylene that is interrupted by a sulphur atom or an oxygen atom, or, if Y is -NH-, R₂ is additionally a direct bond and those wherein in formula (I) n = 4 and R₂ is C₄-C₈-alkanetetrayl. Other preferred sterically hindered phenol compounds according to the invention are those wherein in formula (I) R₁ is t-butyl, n = 1, 2 or 4, X is -CH₂-CH₂-C(O)-Y-, Y is an oxygen atom or -NH- and if n = 1, then R₂ is C₁₄-C₁₈-alkyl; and if n=2, R₂ is C₄-C₆-alkylene or C₄-C₆-alkylene interrupted by an oxygen atom; and if n = 4, R₂ is C₄-C₈-alkanetetrayl.

Such sterically hindered phenol compounds may be, for example, 2,6-di-t-butyl-4-methylphenol, Irganox^{®} 1330, Irganox^{®} 1010, Irganox^{®} 1098, Irganox^{®} 1076, Irganox^{®} 245, Irganox^{®} 259, Irganox^{®} 1035, Irganox^{®} 2246, Irganox^{®} 3114 and Irganox^{®} 3125, the sterically hindered alkylthiomethylphenol Irganox^{®} 1520, *i.e.,* 2,4-di-octylthiomethyl-6-methyl phenol, and the secondary aromatic based antioxidant comprising (polymerized) 1,2-dihydro-2,2,4-trimethylquinoline, such as for example Agerite^{®} MA.

Instead of or additional to the sterically hindered phenol compounds, a sterically hindered alkylthiomethylphenol or arylthiomethylphenol compound or a mixture of such compounds may be used. Such compounds are for example disclosed in US 4,358,616. A suitable and preferred example of sterically hindered alkylthiomethylphenol or arylthiomethylphenol compound is Irganox 1520, i.e. 2,4-di-octylthiomethyl-6-methyl phenol.

According to the invention, the secondary antioxidant may be selected from the group consisting of phosphites and thioesters, but is not limited thereto. Suitable phosphites are for example disclosed in US 5,763,512. According to the invention, the phosphites are preferably selected from the compounds according to formulae (II-IV): 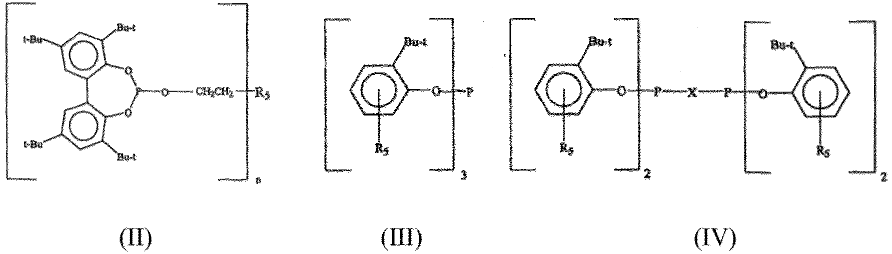 wherein R is a carbon atom, a nitrogen atom or an oxygen atom and wherein n is 2, 3 of 4; wherein R₅ is a C₁-C₄-alkyl group and X is a group as defined above for R₂ of formula (I) or a C₆-C₁₈-hydrocarbyl group, wherein the hydrocarbyl group comprises one or more arylene groups.

According to the invention, the secondary antioxidants are preferably selected from the group consisting of phosphites and thio-esters. Suitable secondary antioxidants are for example Irgafos^{®} 168, Irgafos^{®} 12 and Irgafos^{®} P-EPQ (all phosphites), and Lowinox^{®} TBM-6, BNX^{®} DLTDP (CAS No. 123-28-4) and Morstille 18 DSTDP (all thio-esters). The thioesters are preferably selected from the group of compounds represented by formula (VI): S-(R₆-COOR₇)₂, wherein R₆ is a C₁-C₁₂ alkylene group, preferably a C₁-C₆ alkylene group, and wherein R₇ is a C₁-C₁₂ alkyl group, a C₆-C₁₂ aryl group, a C₇-C₁₂ alkaryl group or a C₇-C₁₂ aralkyl group.

In addition to the primary and secondary antioxidants, the antioxidant composition preferably comprises a further antioxidant selected from the group of lactones represented by formula (V): 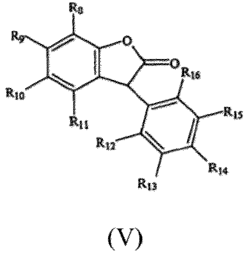 wherein R₈-R₁₁ are independently hydrogen, halogen or C₁-C₁₂ alkyl and wherein R₁₂-R₁₆ are independently hydrogen, halogen or C₁-C₁₂ alkyl. Preferably, R₈-R₁₁ and R₁₂-R₁₆ are independently hydrogen or C₁-C₁₂ alkyl. More preferably, R₈ and R₁₀ are C₁-C₆ alkyl groups, R₉ and R₁₁ are hydrogens and R₁₂-R₁₆ are independently hydrogen or C₁-C₁₂ alkyl groups. Even more preferably, R₈ and R₁₀ are C₁-C₆ alkyl groups, R₉ and R₁₁ are hydrogens, R₁₄ and R₁₅ are C₁-C₆ alkyl groups and R₁₂, R₁₃ and R₁₆ are hydrogens. Such lactones are for example disclosed in US 6,310,220 .

The multifunctional antioxidant preferably comprises a primary and a secondary anti-oxidant function. Examples of multifunctional antioxidants are Irganox^{®} L 115 and Irganox^{®} 565.

An example of a lactone that can be used as antioxidant is Irganox^{®} HP-136.

According to the invention, the composition preferably comprises a primary antioxidant, wherein the primary antioxidant is preferably selected from the group of sterically hindered phenol compounds and secondary aromatic amines, most preferably from the group of sterically hindered phenol compounds.

The composition may comprise a secondary antioxidant, wherein the secondary antioxidant is preferably selected from the group of phosphites.

In one embodiment, the composition comprises a combination of a primary antioxidant and a secondary antioxidant, preferably a combination of a primary and a secondary antioxidant, which have a synergistic effect. A suitable combination is a combination of an Irganox and an Irgafos antioxidant, such as Irganox^{®} 1010 and Irgafos^{®} 168.

In one embodiment, the composition comprises a combination of a primary antioxidant, a secondary antioxidant and a lactone. In one embodiment, the lactone is Irganox^{®} HP-136.

Further antioxidants that can be used in the present invention are known in the prior art, such as described in "Additives for polyolefins", Elsevier Sciences (2015), "Handbook of antioxidants", Elsevier Science (2020), "Hand Book of Pressure Sensitive Adhesives and Coatings", Notion Press (2018), "Stabilisers for Polyolefins", Rapra Technology Limited (2001) and the like, the content of these documents is incorporated herein by reference.

### Exemplary corrosion protection compositions

Any combination of the polyisobutenes, additional amorphous polymers, butyl rubbers, antioxidants and fillers provided herein may be used in the corrosion protection composition. The sum of the wt.% of all components provided herein results in 100 wt.%. In case additional components are present in the inventive corrosion protection composition, the sum of the wt.% of all components provided and the sum of the wt.% of such additional components results in 100 wt.%.

Any of the disclosure below can also be combined with the general disclosure above.

The corrosion protection composition of the present invention may comprise (a) at least one LMW PIB, or (b) at least one MMW PIB and one or more butyl rubbers in a total amount of at most 10 wt.%, or (c) at least one MMW PIB and at most one butyl rubber, and/or (d) the one or more butyl rubbers have a Mooney viscosity (1+8) at 125 °C < 55 MU according to ISO 289.

The corrosion protection composition of the present invention may comprise (a) at least one LMW PIB and one or more butyl rubbers, or (b) at least one MMW PIB and one or more butyl rubbers, or (c) at least one LMW PIB and at least one MMW PIB and one or more butyl rubber, and (d) the one or more butyl rubbers have a Mooney viscosity (1+8) at 125 °C < 55 MU according to ISO 289.

In one embodiment of the present invention the corrosion protection composition consists of any of the combination of components as provided herein. In other words, the term "comprising" in the general description and the embodiments provided herein can be replace with the term "consisting of'. Also, in one further embodiment, the term "comprising" can be replaced by the term "consisting essentially of'.

An exemplary corrosion protection composition may comprise about 10-40 wt.% of one or more LMW PIB, about 5-20 wt.% of one or more butyl rubbers, about 30-60 wt.% of one or more fillers, and about 0.01-1 wt.% of one or more antioxidants. The sum of all components is 100 wt.%, all based on the overall weight of the corrosion protection composition.

An exemplary corrosion protection composition may comprise about 10-40 wt.% of one LMW PIB, about 5-20 wt.% of one or more butyl rubbers, about 30-60 wt.% of one or more fillers, and about 0.01-1 wt.% of one or more antioxidants. The sum of all components is 100 wt.%, all based on the overall weight of the corrosion protection composition.

An exemplary corrosion protection composition may comprise about 10-40 wt.% of one LMW PIB, about 5-20 wt.% of one butyl rubber, about 30-60 wt.% of one or more fillers, and about 0.01-1 wt.% of one or more antioxidants. The sum of all components is 100 wt.%, all based on the overall weight of the corrosion protection composition.

An exemplary corrosion protection composition may comprise about 10-40 wt.% of one LMW PIB, about 5-20 wt.% of one butyl rubber, about 30-60 wt.% of one filler, and about 0.01-1 wt.% of one or more antioxidants. The sum of all components is 100 wt.%, all based on the overall weight of the corrosion protection composition.

Another exemplary corrosion protection composition may comprise about 10-40 wt.% of one or more MMW PIB, about 5-20 wt.% of one or more butyl rubbers, about 30-60 wt.% of one or more fillers, and about 0.01-1 wt.% of one or more antioxidants. The sum of all components is 100 wt.%, all based on the overall weight of the corrosion protection composition.

Another exemplary corrosion protection composition may comprise about 10-40 wt.% of one MMW PIB, about 5-20 wt.% of one or more butyl rubbers, about 30-60 wt.% of one or more fillers, and about 0.01-1 wt.% of one or more antioxidants. The sum of all components is 100 wt.%, all based on the overall weight of the corrosion protection composition.

Another exemplary corrosion protection composition may comprise about 10-40 wt.% of one MMW PIB, about 5-20 wt.% of one butyl rubber, about 30-60 wt.% of one or more fillers, and about 0.01-1 wt.% of one or more antioxidants. The sum of all components is 100 wt.%, all based on the overall weight of the corrosion protection composition.

Another exemplary corrosion protection composition may comprise about 10-40 wt.% of one MMW PIB, about 5-20 wt.% of one butyl rubber, about 30-60 wt.% of one filler, and about 0.01-1 wt.% of one or more antioxidants. The sum of all components is 100 wt.%, all based on the overall weight of the corrosion protection composition.

A further exemplary corrosion protection composition may comprise about 10-40 wt.% of one or more LMW PIB, about 10-40 wt.% of one or more MMW PIB, about 5-20 wt.% of one or more butyl rubbers, about 30-60 wt.% of one or more fillers, and about 0.01-1 wt.% of one or more antioxidants. The sum of all components is 100 wt.%, all based on the overall weight of the corrosion protection composition.

A further exemplary corrosion protection composition may comprise about 10-40 wt.% of one LMW PIB, about 10-40 wt.% of one MMW PIB, about 5-20 wt.% of one butyl rubber, about 30-60 wt.% of one filler, and about 0.01-1 wt.% of one or more antioxidants. The sum of all components is 100 wt.%, all based on the overall weight of the corrosion protection composition.

### Wrapping tape

The invention also relates to a tape for the protection of an article against corrosion, wherein the tape comprises a layer comprising the corrosion protection composition of the invention. Thus, the present invention also solves the problem by providing tapes for the protection against corrosion of articles. The terms tape and wrapping tape are used herein interchangeably.

Provided herein is a (wrapping) tape comprising a layer comprising a corrosion protection composition comprising:
(i) an amorphous polymer composition comprising one or more polyisobutenes each having a glass transition temperature of -40 °C or less as determined by differential scanning calorimetry (DSC);
(ii) one or more butyl rubbers;
(iii) one or more antioxidants; and
(iv) one or more filler materials,
wherein the amorphous polymer composition comprises one or more polyisobutenes are independently selected from the group consisting of low-molecular weight polyisobutene (LMW PIB) having an average molecular weight Mv in the range of about 500 to about 20,000, and a mid-molecular weight polyisobutene (MMW PIB) having an average molecular weight Mv in the range of about 20,000 to about 120,000. The composition of the components is as described in detail above.

In addition, the tape comprises a first layer (a) comprising backing made from for example a polymer or a copolymer as defined below (film, non-woven fabric etc.). The inventive corrosion protecting composition is applied as second layer (b) onto one side of the first layer (a).

The wrapping tape according to the invention can be easily applied to the shaped article to be protected since the second layer can easily be deformed. Moreover after being applied, the wrapping tape can also be removed. Although due to cohesive breakage it does leave some residuals on the surface of the shaped article (according to general industrial requirements and standards, the cohesive separation will leave the substrate covered for 95% or more with the inventive composition), these residuals can be easily removed by scraping or any other suitable removing technique. Additionally, the wrapping tape can in particular be applied to pipe fittings, such as T-joints, elbows, bends, flanges and the like. Furthermore, the wrapping tape according to the invention can suitably be used for repairing damaged or corroded shaped articles that were already provided with some protecting material according to the state of the art, provided that the surface of the shaped article is cleaned to a minimum cleanliness level of St 2 according to ISO 8501-1.

If necessary, the wrapping tape may comprise a further layer (c) to protect the second layer (b). When transported such a protecting layer (c) enables that the tape can easily be wound on a bobbin or spool or other suitable means, and prevents inter-adhesion of the layers of the tape.

Layer (c) may have the function of a release liner, which is removed from the tape during application of the tape. Layer (c) may then comprise any suitable material for a release liner, *e.g.,* paper, siliconized PET, one or more C₂-C₂₀ alkene polymers or copolymers, a polyvinyl chloride (PVC), a polyurethane, or the like. In addition, said layer also serves as a separation layer in order to increase easy of application and as a layer to enable proper adhesion of a subsequently applied mechanical protective layer. Using the mechanical protective layer provides the self-repairing properties due to the fluid and/or visco-elastic nature of the second layer (b).

Moreover, in one embodiment the wrapping tape preferably may have between layers (a) and (b) a further layer (d) comprising a reinforcing net-like layer having a woven, knitted or spool-knitted structure and that can be deformed in two orthogonal directions. The reinforcing net-like layer can be manufactured from polyolefin fibres, e.g. fibres made from ethane homopolymers or copolymers, propene homopolymers or copolymers, polyester, but is not limited to, as is well known in the art.

Layer (a) of the wrapping tape may comprise a polymer or a copolymer. For example, layer (a) may be made of one or more α-olefins and/or diolefins, ethylenetetrafluoroethylen (ETFE), nylon, polyurethane and the like. Further examples of such polymers and copolymers are EP(D)M elastomers, ethylene homopolymers, ethylene-α-olefin copolymers, propylene homopolymers and propylene-α-olefin copolymers. If the copolymer is an ethylene copolymer which is a preferred embodiment of the invention, the α-olefin is then preferably a C₃-C₁₂-α-olefin, in particular a C₃-C₈-α-olefin. Examples of suitable α-olefins are propene, 1-butene, 1-hexene and 1-octene. The ethylene copolymers preferably comprise 0.1 to 30 wt.%, in particular 0.1 to 20 wt.% α-olefin. The density of the ethylene homopolymers or copolymers (as measured according to ASTM D 1248) is preferably 0.800-0.975 g/cm³, in particular 0.850-0.950 g/cm³. The melt index (as measured according to ASTM D 1238) of the ethylene homopolymers or copolymers is preferably 0.1 to 50 g/min., in particular 0.2 to 20 g/min. Layer (a) of the wrapping tape comprises preferably one or more of the following polymers: low density polyethylene (LDPE), linear low density polyethylene (LLDPE), medium density polyethylene (MDPE), high density polyethylene (HDPE), an ethene propene copolymer, an ethene propene diene copolymer. According to a preferred embodiment of the invention, layer (a) of the wrapping tape comprises LDPE, MDPE, HDPE or LLDPE or a combination thereof, such as preferably a combination of LDPE and MDPE.

Layer (a) may comprise more than one layer and can for example be a multilayer film comprising of LLDPE outer layers and a HDPE inner layer. Such multilayer films are well known in the art. Layer (a) may further comprise different additives such as pigments and fillers. In one embodiment, layer (a) is only one layer.

The tape of the invention has a total thickness that is suitably for the respective purpose. For example, the tape has a total thickness of about 1 to about 20 mm, more preferably of about 1 to about 15 mm, about 1 to about 10 mm, about 1 to about 7 mm, about 1 to about 5 mm, or about 1 to about 3 mm. In a preferred embodiment the thickness is about 2 mm. The width of the tape can be adjusted as desired or as suitable, but is preferably about 2.0 to about 100.0 cm, more preferably about 2.5 to about 75.0 cm, even more preferably about 3.0 to about 70.0 cm, even more preferably about 4.0 to about 65.0 cm and most preferably about 5.0 to about 60.0 cm. The length of the tape can also be adjusted as desired or as suitable. A tape with a length of for example several meters may be wound around a bobbin or spool prior to use. However, the tape may also be in the form of a sheet. The length and width of said sheet can be adjusted as desired or as suitable.

In one embodiment, the tape is applied to the article to be protected while the article is in a dry environment. The surface of the article to be protected generally does not need extensive pre-treatment. However, some pre-treatments may enhance the adhesive properties of the adhesive composition. For instance, the article may comprise a base layer of a pre-coat, e.g. a pre-coat based on an epoxy resin. In another embodiment of the present invention, the article may have as base layer a polyolefin layer. Consequently, one application of the adhesive composition is the use thereof in a process for manufacturing precoated steel pipes wherein the pipes are provided with a pre-coating, preferably a polyolefin coating, preferably a polyethene or a polypropene coating. In one embodiment, no base layer is present.

The invention also relates to a process for the manufacture of a wrapping tape for the protection of a shaped article against corrosion having the composition as provided herein. In addition, in the process for the manufacture of a tape for the protection of an article against corrosion the corrosion protection composition of the invention is laminated onto a film, said film is as described above and preferably comprising a polymer or a copolymer of one or more (substituted) α-olefins and/or diolefins, such as one or more C₂-C₂₀ α-alkene(s) and/or alkadiene(s), a polyvinyl chloride (PVC), a polyurethane, or a non-woven polyester cloth as defined above for layer (c) of the tape of the invention.

After said lamination step, the surface of layer (b) not being in contact with layer (a) is preferably protected by a layer (c), wherein layer (c) may be any suitable material described above.

If a layer (d) is present between layers (a) and (b) as described above, layers (a) and (d) are first laminated where after a layer (b) is applied to the surface of layer (d) opposite the surface of layer (d) that is in contact with layer (a). The thickness of layer (b) is controlled by e.g. a knife.

After the wrapping tape is manufactured, it is preferably wrapped around a bobbin or a spool.

Another important advantage of the wrapping tape according to the invention is the following. It is known in the art that sulphate-reducing bacteria are frequently encountered in defects in the protective layer of subterranean shaped articles. These bacteria are capable of producing hydrogen sulphide that is known to promote metal corrosion (cf. for example S. Grobe et al., Materials and Corrosion, Vol. 47, pages 413-424, 1996; M.J. Feijo et a., Materials and Corrosion, Vol. 651, pages 691-697, 2000 ). Since during the application of a protective layer infection and inclusion may occur, it is essential that components that promote bacterial growth do not permeate during the protective layer. Moreover, it is believed that at least one of the essential elements (in particular carbon, hydrogen, sulphur, and nitrogen) must be absent in order to prevent the growth of such bacteria. Since the wrapping tape according to the invention has a low permeability for gases (air, i.e. nitrogen, oxygen and water vapor) and is water resistant and is free of nitrogen and sulphur containing compounds (unless a particular antioxidant is used that contains nitrogen; it is believed, however, that this is not detrimental given the fact that only small amounts of antioxidants are added), the inventors believe that with the wrapping tape according to the invention corrosive problems due to such microorganisms do not occur.

Finally, it has been noted that with protective systems like butyl rubber (which is spirally applied to shaped articles such as pipe lines) corrosion occurs in the areas of overlap between different windings ("spiral corrosion") due to the fact that in the areas of overlap the rather stiff butyl rubber windings are not in intimate contact so that occlusion of air, water vapor occurs. Such problems do, however, not occur with the wrapping tape according to the invention because of the fluid and/or visco-elastic nature of layer (b).

The present invention further relates to a process for covering a shaped article with a wrapping tape, wherein the wrapping tape comprises:
(a) a first layer comprising a film, said film comprising a polymer or a copolymer of one or more α-olefins and/or diolefins, and
(b) a second layer comprising a composition comprising:
   (i) an amorphous polymer composition comprising a one or more polyisobutenes blends each having a glass transition temperature of -40 °C or less as determined by differential scanning calorimetry (DSC);
   (ii) one or more butyl rubbers;
   (iii) one or more antioxidants; and
   (iv) one or more filler materials,
wherein the amorphous polymer composition comprises one or more polyisobutenes independently selected from the group consisting of low-molecular weight polyisobutene (LMW PIB) having an average molecular weight Mv in the range of about 500 to about 20,000, and a mid-molecular weight polyisobutene (MMW PIB) having an average molecular weight Mv in the range of about 20,000 to about 120,000.

According to the invention, steel surfaces of the shaped article should be cleaned to a minimum cleanliness level of St 2 according to ISO 8501-1 prior to the application of the wrapping tape. The St 2 level is defined as: "Thorough hand and power tool cleaning" which can be obtained by techniques such as scraping, wire-brushing, machine brushing and grinding as further defined in ISO 8504-3. After hand and power tool cleaning, the surface shall be cleaned from loose dust and debris. When viewed without magnification, the surface shall be free from visible oil, grease and dirt, and from poorly adhering mill scale, rust, paint coatings and foreign matter. The surface should have a faint metallic sheen, and no anchor pattern is required. The surface of the shaped article may also be made of any polymer or a copolymer disclosed above.

The wrapping tape is preferably wrapped around the shaped article such that subsequent layers of the wrapping tape overlap each other, wherein - depending on the thickness of the tape-the overlap has preferably a width of at least 1.0 mm, more preferably a width of at least 5.0 mm and in particular a width of at least 10.0 mm. Greater widths, e.g. about 50.0 mm are also possible but that is also dependent from the width of the wrapping tape used as will be obvious to the skilled person. It is, however, necessary that the width of the overlap is at least 1.0 mm to obtain a proper sealing. Moreover, the first and last windings are preferably applied essentially perpendicular to the wrapping direction, that is if the shaped article is for example a pipe line, the first and last windings are applied essentially circumferential and essentially perpendicular to the length of the pipe line. If the end of a first wrapping tape is reached, a second wrapping tape may be applied where the first wrapping tape expired, provided that the longitudinal overlap is at least 1.0 mm, preferably at least 5.0 mm and most preferably at least 10.0 mm. The wrapping tape is preferably applied without tension.

In one embodiment of the invention, it is preferred that after the wrapping tape has been applied, an outer wrap layer is wrapped around the shaped article. In one embodiment the outer wrap is a polymeric tape or heat shrinkable sleeve. Preferably the outer wrap layer is made from materials comprising one or more polyolefins that are preferably selected from the group consisting of ethylene homopolymers, ethylene copolymers, ethylene vinylchloride copolymers, vinylchloride polymers and ethylene vinylacetate copolymers. According to a preferred embodiment of the invention, the outer wrap tape is a PVC film. The outer wrap tape is preferably applied with tension.

Preferably, the outer wrap polymeric tape is wrapped such that the width of the overlap is at least 20% of the width of the outer wrap polymeric tape, preferably at least 40% of the width of the outer wrap polymeric tape.

The application of the inventive composition is in particular in the field of corrosion protection. Consequently, according to the invention, the article is therefore oil lines, oil pipes, gas lines, gas pipes, man hole covers, underground tanks, welding joints, flanges, crane hooks, thermit weldings in divisible shafts below the ground level, bridges, buildings, rolling stocks, in T-joints and the like, but is not limited thereto. The article to be protected may also be any part of a wind turbine or wind power plant, both on- or off-shore. Furthermore, it is preferred that the article is essentially made of metal, metal compositions or metal alloys, most preferably of steel. The corrosion protection composition of the invention can also be used in the protection of plastic materials, i.e. to protect against any form of degradation of plastic (polymeric) materials, or in the protection of concrete or concrete materials.

The composition of the invention fulfils all necessary industry requirements, such as the main standard for oil & gas industry (ISO 21809-3:2016).

### Protected article

The invention also relates to an article, comprising:
(a) a layer of a corrosion protection composition as defined hereinbefore on a surface of the article; and
(b) a mechanical protective layer to protect said layer of said corrosion protecting composition.

The article may optionally comprise additional layers. In a preferred embodiment, the article further comprises a watertight layer. In another preferred embodiment the mechanical protective layer (b) itself is watertight.

The mechanical protective layer (b) is applied on top of the layer of the corrosion protecting layer (a), covering it completely. Suitable protecting layers are for example provided by high shear tapes which are well known in the art. High shear tapes are for example disclosed in US 5.817.413 and US 6.033.776.

The layer of the corrosion protecting composition according to the invention may be comprised in a tape according to the invention. The mechanical protective layer (b) may have been applied separately to the article, or alternatively, the mechanical protective layer (b) may also be comprised in said tape. The invention also relates to an article, comprising a tape according to the invention. In said article, the surface of the article is covered by said tape.

In a preferred embodiment, the article is essentially made of metal, in particular steel. Alternatively, the surface of the article is essentially made of metal, in particular steel, whereas the interior of the article may comprise a different material. The article may for example be a tubular article such as for example a gas or oil pipe or line. The article may also be a riser of an oil drilling or production rig or platform, a wind tower, a piller foundation or pier of e.g. a bridge, a buttress foundation of a dam, or a concrete wall.

The invention will be further illustrated by the following examples which are, however, not intended to restrict the scope of the invention by any means.

### Examples

### Compositions

Several compositions according to the invention were prepared by mixing the components as listed in table 1 below (in wt.%):

**Table 1: Corrosion protection compositions**

| **Composition** | **A** | **B** | **C** | **D** | **E** | **F** |
|---|---|---|---|---|---|---|
| LMW PIB | 30 | 20 | 10 | 10 | 0 | 40 |
| MMW PIB | 15 | 10 | 40 | 30 | 31 | 0 |
| Butyl rubber | 17 | 17 | 20 | 11 | 8 | 20 |
| Filler | 37 | 52 | 29 | 48 | 60 | 39 |
| Antioxidants | 1 | 1 | 1 | 1 | 1 | 1 |

The composition have been prepared by first mixing a part of the components at about 160 °C. After completion of the mixing process, a second part of the components are added and mixed again at 160 °C. Finally, the remaining parts of the components are added and again mixed at 160 °C in order to obtain the final corrosion protection composition according to the invention.

### Peel tests

Adhesion was tested on wrapping tapes comprising a backing and netting as described herein according to peel strength test as described in ISO 21809-3:2016 annex H. Requirements of ISO 21809-3:2016 table 12 were used. Peel strength was tested and recorded with a tensile testing machine at a peel rate of 10 mm/min and after this the test specimens were inspected for occurrence of cohesive separation (desired property), absence of adhesive failure and coverage of substrate with remaining film of composition. The results are summarized in Table 2.

**Table 2: Adhesion**

| **Composition** | **A** | **B** | **C** | **D** | **E** | **F** |
|---|---|---|---|---|---|---|
| Peel test at 23 °C: | | | | | | |
| Peel strength (N/mm) | 0,28 | 0,30 | 0,48 | 0,38 | 0,52 | 0,27 |
| Substrate coverage (%) | ≥ 99% | ≥ 96% | ≥ 99% | ≥ 95% | ≥ 98% | ≥ 99% |
| Peel test at 85 °C: | | | | | | |
| Peel strength (N/mm) | 0,043 | 0,063 | 0,055 | 0,048 | 0,070 | 0,046 |
| Substrate coverage (%) | ≥ 99% | ≥ 99% | ≥ 99% | ≥ 99% | ≥ 99% | ≥ 99% |

| | | | | | | |
|---|---|---|---|---|---|---|
| All tests showed cohesive separation mode, no signs of adhesive failure were observed. | | | | | | |

The results shown in Table 2 show that the corrosion protecting compositions according to the invention show a good adhesion.

## Claims

1. A corrosion protection composition comprising:
(i) an amorphous polymer composition comprising one or more polyisobutenes each having a glass transition temperature of -40 °C or less as determined by differential scanning calorimetry (DSC);
(ii) one or more butyl rubbers;
(iii) one or more antioxidants; and
(iv) one or more filler materials,
wherein the one or more polyisobutenes are independently selected from the group consisting of low-molecular weight polyisobutenes (LMW PIB) having an average molecular weight Mᵥ in the range of about 500 to about 20,000, and mid-molecular weight polyisobutenes (MMW PIB) having an average molecular weight Mᵥ in the range of about 20,000 to about 120,000.

2. The corrosion protection composition of claim 1, wherein the corrosion protection composition comprises:
• at least one LMW PIB, or
• at least one MMW PIB and one or more butyl rubbers in a total amount of at most 10 wt.%, or
• at least one MMW PIB and at most one butyl rubber, and/or
• the one or more butyl rubbers have a Mooney viscosity (1+8) at 125 °C < 55 MU according to ISO 289.

3. The corrosion protection composition of any one of the preceding claims, wherein the one or more PIB are selected from the group consisting of
a) polyisobutenes having a number average molecular weight Mₙ of 500 - 5.000;
b) polyisobutenes having a viscosity average molecular weight Mᵥ of 5.000 - 20.000;
c) polyisobutenes having a viscosity average molecular weight Mᵥ of 20.000 - 35.000;
d) polyisobutenes having a viscosity average molecular weight Mᵥ of 35.000 - 45.000;
e) polyisobutenes having a viscosity average molecular weight Mᵥ of 45.000 - 55.000;
f) polyisobutenes having a viscosity average molecular weight Mᵥ of 55.000 - 65.000;
g) polyisobutenes having a viscosity average molecular weight Mᵥ of 65.000 - 75.000;
h) polyisobutenes having a viscosity average molecular weight Mᵥ of 75.000 - 85.000; and
i) polyisobutenes having a viscosity average molecular weight Mᵥ of 85.000 - 120.000.

4. The corrosion protection composition of any one of the preceding claims, wherein the one or more PIB are present in an amount of 10 to 70 wt.% based on the overall weight of the corrosion protection composition.

5. The corrosion protection composition of any one of the preceding claims, wherein the one or more butyl rubbers are present in an amount of 5 to 25 wt.% based on the overall weight of the corrosion protection composition.

6. The corrosion protection composition of any one of the preceding claims, wherein the one or more antioxidants comprise one or more primary and one or more secondary antioxidants, the one or more primary antioxidants comprise sterically hindered phenol compounds, sterically hindered alkylthiomethylphenol or arylthiomethylphenol compounds, and secondary aromatic amines provided that the sterically hindered phenol compound is not 2,6-di-t-butyl-4-methylphenol, and wherein the antioxidants are present in an amount of up to 5 wt.% based on the total weight of the corrosion protection composition.

7. The corrosion protection composition of claim 6, wherein the sterically hindered phenol compound comprises at least two sterically hindered phenol groups, and/or wherein the secondary anti-oxidant is selected from the group consisting of phosphites and thioesters.

8. The corrosion protection composition of claim 6 or 7, wherein the anti-oxidant composition further comprises a lactone.

9. The corrosion protection composition of any one of the preceding claims, wherein one or more filler materials are present in an amount of 25 to 70 wt.%, based on the total weight of the corrosion protection composition.

10. Wrapping tape for the protection of an article, comprising (a) a first layer, and (b) a second layer comprising the corrosion protection composition according to any one of claims 1 to 8.

11. The wrapping tape of claim 10, wherein the first layer is a film comprising a polymer or a copolymer of one or more α-olefins and/or diolefins.

12. Use of a composition for the protection of an article against corrosion, comprising:
(a) application of a layer of the corrosion protection composition according to any one of claims 1 to 9 or the wrapping tape according to claim 10 or 11; and optionally,
(b) application of a mechanical protective layer on top of the layer of said corrosion protection composition or the wrapping tape.

13. Process for the manufacturing of a wrapping tape, wherein a corrosion protection composition is laminated onto a film, said film comprising a polymer or a copolymer and said corrosion protecting composition comprising:
(i) an amorphous polymer composition comprising one or more polyisobutenes each having a glass transition temperature of -40 °C or less as determined by differential scanning calorimetry (DSC);
(ii) one or more butyl rubbers;
(iii) one or more antioxidants; and
(iv) one or more filler materials,
wherein the one or more polyisobutenes are independently selected from the group consisting of low-molecular weight polyisobutenes (LMW PIB) having an average molecular weight Mᵥ in the range of about 500 to about 20,000, and mid-molecular weight polyisobutenes (MMW PIB) having an average molecular weight Mᵥ in the range of about 20,000 to about 120,000.

14. Process for covering a shaped article with a wrapping tape according to claim 10 or 11.

15. Process for covering a shaped article with a wrapping tape according to claim 14, wherein the wrapping tape is wrapped around the shaped article such that subsequent layers of the wrapping tape overlap each other.

16. Process of claim 14 or 15, wherein after the wrapping tape has been applied, a mechanical protective layer is wrapped around the shaped article.
